# EUROPÄISCHE PATENTSCHRIFT

(11) **EP 3 804 959 B1**
(45) Veröffentlichungstag und Bekanntmachung des Hinweises auf die Patenterteilung: **05.07.2023**
(21) Anmeldenummer: 20199046.2
(22) Anmeldetag: 29.09.2020
(51) Int. Cl.: B29C 51/04, B29C 51/10, B29C 51/08, B29C 51/42, B29C 51/46, B29C 51/38

(54) **TIEFZIEHEINRICHTUNG ZUM TIEFZIEHEN VON VERPACKUNGSKÖRPERN, Z.B. VERPACKUNGSSCHALEN, AUS TIEFZIEHFOLIE**
DEEP-DRAWING DEVICE FOR DEEP-DRAWING PACKAGING BODIES, SUCH AS PACKAGING TRAYS MADEFROM DEEP-DRAWN FILM
DISPOSITIF D'EMBOUTISSAGE PROFOND DES CORPS D'EMBALLAGE, PAR EXEMPLE DES BARQUETTES D'EMBALLAGE, EN FEUILLE À EMBOUTIR

(30) Priorität: 11.10.2019 DE 102019127516
(43) Veröffentlichungstag der Anmeldung: 14.04.2021
(73) Patentinhaber: Intrama Invest Eood, 9300 Dobritsch (BG)
(72) Erfinder:
(74) Vertreter: Wasiljeff, Johannes M.B.

(56) Entgegenhaltungen:
- DE-A1- 3 905 177
- JP-A- 2000 229 348
- JP-A- 2012 218 338

## Beschreibung

Die Erfindung betrifft eine Tiefzieheinrichtung zum Tiefziehen von Verpackungskörpern, z.B. von Verpackungsschalen für Verpackungen, gemäß dem Oberbegriff von Anspruch 1.

Die Erfindung befasst sich mit dem Tiefziehen von Verpackungskörpern, wie bspw. Verpackungsschalen, Trays, etc., die an einer Tiefziehmaschine aus einer Tiefziehfolie aus Kunststoff geformt werden. Typischerweise haben derartige Verpackungsschalen eine Tiefe von einigen Millimetern bis zu mehreren Zentimetern bis in den Dezimeterbereich.

Herkömmlicherweise wird hierzu die Tiefziehfolie an einer Heizplatte erhitzt und sodann mittels von oberhalb der Tiefziehfolie zugeführter Druckluft verformt, indem die Druckluft die Tiefziehfolie dehnt und gegen einen unterhalb der Tiefziehfolie angeordneten Formwerkzeugeinsatz drückt.

Typischerweise ergibt sich die größte Verformung in der Mitte der Tiefziehfolie. Daher ändert sich in dem Bereich der Mitte der Tiefziehfolie die Foliendicke am stärksten. D.h. bereits nach geringer Verformung ergibt sich die dünnste Stelle der Tiefziehfolie im Bereich der Mitte. Die Tiefziehfolie wird daher im Bereich der Mitte zunächst am stärksten geschwächt, so dass sich in dem Bereich der Mitte eine Blase bildet. Als Folge dieser Blase entsteht eine Zone mit geringerem Verformungswiderstand und die weitere Verformung der Tiefziehfolie erfolgt überwiegend in dieser Zone.

Die zunehmende Schwächung der Folie in dieser Zone führt gelegentlich zu einem Bruch bzw. Reißen der Folie, wodurch der Verpackungsprozess gestört wird.

Eine Möglichkeit zur Verhinderung derartiger Brüche oder Folienrisse besteht darin, eine dickere Folie zu verwenden. Dies ist jedoch nachteilig, da dickere Folien typischerweise auch teurer sind und einen höheren Materialeinsatzes und damit Ressourceneinsatz erfordern. Daher ist dieser Ansatz weder ökonomisch noch ökologisch sinnvoll.

Wenn jedoch die Verformung in diesem Stadium des Tiefziehens nicht zu einem Bruch oder Reißen der Folie führt, stößt die Folie schließlich auf den Formwerkzeugeinsatz und beginnt sich in Richtung von Seitenwänden eines Formwerkzeugunterteil zu verformen. Dabei entstehen jedoch weitere problematische Zonen:
Eine erste problematische Zone ergibt sich im Bereich des dem Rande der Heizplatte benachbarten Verpackungskörpers. Diese Zone lässt sich schlecht formen, so dass sich ein nicht perfektes Erscheinungsbild des Verpackungskörpers ergibt und zudem die Abmessungen nicht denjenigen der Tiefziehformteil entsprechen.

Eine zweite problematische Zone stellt die Seitenwand bzw. stellen die Seitenwände des Verpackungskörpers dar, da die Verteilung der Dicke der Tiefziehfolie über die Höhe der Seitenwand bzw. Seitenwände ungleichmäßig ist. Als Folge der in der Mitte der Tiefziehfolie entstehenden Blase mit geringem Folienwiderstand, wird Material überwiegend von diesem den Boden bildenden Bereich abgezogen und dafür vergleichsweise wenig Material von den Seitenwänden.

Eine dritte problematische Zone ergibt sich im Übergangsbereich von Boden zu Seitenwänden. In diesem Bereich ergibt sich die dünnste Folienstärke nach der Verformung. Daher ist in diesem Bereich die Gefahr eines Reißens des Verpackungskörpers zum Abschluss der Verformungsphase am höchsten.

Die Folienstärke ist während des Formvorgangs in dem mittleren Bereich des Bodens am geringsten. Wenn der mittlere Bereich des Bodens auf den Formwerkzeugeinsatz stößt, stoppt die Verformung in der Mitte (da die Folie vom Einsatz gekühlt wird) und wird weiter, hauptsächlich in den Ecken - aber auch im Bereich der Kanten - des Bodens (vornehmlich im Übergangsbereich zwischen Boden und Seitenwänden) ausgedehnt. Am Ende des Formvorgangs ist die Folie in den Ecken am dünnsten.

Der Verpackungskörper kann daher in diesem Bereich am ehesten beschädigt werden, insbesondere wenn feste Produkte auf diesem Bereich zu liegen kommen bzw. während eines Transports reiben.

Im Stand der Technik ist zudem bekannt, den Formwerkzeugeinsatz vor dem Tiefziehen in eine solche untere Position zu bringen, d.h. in einen derartigen Abstand zur Heizplatte, der der anschließenden Tiefe des Verpackungskörpers entspricht. Das Einstellen der unteren Position des Formwerkzeugeinsatzes erfolgt typischerweise mittels Abstandselementen und ist ein für eine Charge herzustellender Verpackungskörper einmaliger Vorgang. Die untere Position des Formwerkzeugeinsatzes bleibt daher während der Herstellung einer Charge von Verpackungskörpern konstant.

Aus dem Stand der Technik ist ferner ein Stempelsystem bekannt, bei dem eine vorgeheizte Tiefziehfolie über eine Tiefziehform gefahren wird. Die Tiefziehfolie wird sodann durch den Stempel nach unten gedrückt und berührt schließlich die gekühlten Wände der Tiefziehform. Hierbei wird die Tiefziehfolie im oberen Bereich der Verpackung recht gleichmäßig ausgeformt und es verbleibt mehr Folienmaterial im unteren Bereich der Verpackung. Hierdurch wird zwar eine recht stabile Verpackung erhalten. Jedoch erfordert dieses Stempelsystem eine Folienvorheizung mit Verlängerung der Maschine und daraus resultierendem höheren Kosteneinsatz.

Aus DE 39 05 177 A1 ist ein Verfahren und ein Formwerkzeug zum Verformen einer Kunststofffolie mittels Druckluft bekannt, wobei angeheizte Hochdruck-Pressluft von bis zu 300 bar verwendet wird, um eine Kunststofffolie gegen eine Bodenplatte eines Formwerkzeug zu drücken, die durch Federn abgestützt ist und Führungsbolzen aufweist, welche in Führungsbohrungen gleiten. Wenn ein Druckraum des Formwerkzeug mit Hochdruck-Pressluft beaufschlagt wird, wird die Kunststofffolie verformt, wobei die Bodenplatte durch den Druck unter Zusammenpressen der Federn zurückfährt, bis sie anschlägt. Die hohen Drücke der Pressluft drücken die Folie auch in die zwischen den beweglichen und unbeweglichen Teilen gebildeten Spalten. Die Verwendung dünner Folien führt daher bei derartigen Hochdrucksystemen dazu, dass die Gefahr eines Folienrisses hoch ist. Daher eignet sich dieses Verfahren nicht bei Verwendung dünner Folien. Eine Reduzierung des hohen Druckes scheidet aus, da der hohe Druck erforderlich ist, um die Federkraft der federnd abgestützten Bodenplatte zu überwinden, damit die Bodenplatte in ihre untere Position zurückfahren kann. Eine signifikante Reduzierung des Drucks der Pressluft bei Reduzierung der Foliendicke ist daher nicht möglich.

Aus JP 2000 229348 A ist ein System zum Tiefziehen und Umformen von eingespannten und erhitzten thermoplastischen Harzplatten zu Badewannen mittels Druckluft bekannt.

Die Erfindung zielt darauf ab, die oben beschriebenen Nachteile zu vermeiden.

Der Erfindung liegt daher die Aufgabe zugrunde, die Dicke der Tiefziehfolie nach dem Tiefziehen gleichmäßiger auszugestalten.

Die Erfindung löst diese Aufgabe mit den Merkmalen einer Tiefzieheinrichtung gemäß Anspruch 1.

Die erfindungsgemäße Tiefzieheinrichtung zum Tiefziehen von Verpackungskörpern, wie bspw. Verpackungsschalen für Verpackungen, aus Tiefziehfolie umfasst daher ein Formwerkzeug mit einem Formwerkzeugoberteil und einem Formwerkzeugunterteil, wobei das Formwerkzeugoberteil eine Heizplatte zum Erhitzen der Tiefziehfolie aufweist und das Formwerkzeugunterteil einen oder mehrere formgebende Formwerkzeugeinsätze aufweist. Dieser Formwerkzeugeinsatz lässt sich bzw. diese Formwerkzeugeinsätze lassen sich mittels einer von einer Steuereinrichtung gesteuerten Antriebseinrichtung anheben und absenken, wobei zum Tiefziehen Druckluft die erhitzte Tiefziehfolie gegen den Formwerkzeugeinsatz bzw. die Formwerkzeugeinsätze drückt. Die dazu vorgesehene mit der Antriebseinrichtung gekoppelte Steuereinrichtungsteuert die Antriebseinrichtung derart an, dass die Antriebseinrichtung während des Tiefziehens den Formwerkzeugeinsatz bzw. die Formwerkzeugeinsätze von einer ersten, der Heizplatte angenäherten Position in eine zweite, von der Heizplatte entfernte Position verbringt. Dies geschieht in einer derartigen Weise, dass die Tiefziehfolie während des Tiefziehens an dem Formwerkzeugeinsatz bzw. den Formwerkzeugeinsätzen anliegt.

Erfindungsgemäß wird daher eine Tiefzieheinrichtung bereitgestellt, bei der der Formwerkzeugeinsatz bzw. die Formwerkzeugeinsätze mittels Antriebseinrichtung in seiner/ihrer Höhe während des Tiefziehvorganges verändert wird/werden. Dies geschieht in einer derartigen Weise, dass die Tiefziehfolie sehr früh in Kontakt mit dem Formwerkzeugeinsatz bzw. den Formwerkzeugeinsätzen gelangt und zwar bereits bevor die endgültige Tiefe des Verpackungskörpers erreicht ist. Die Tiefziehfolie legt sich sodann auf den Formwerkzeugeinsatz bzw. die Formwerkzeugeinsätze. Sodann verbringt die Antriebseinrichtung den Formwerkzeugeinsatz bzw. die Formwerkzeugeinsätze zusammen mit der Tiefziehfolie in seine zweite/ihre Position, welche die endgültige Tiefe des Verpackungskörpers bestimmt. Dank dieser Steuerung der Antriebseinrichtung des Formwerkzeugeinsatzes bzw. der Formwerkzeugeinsätze ergibt sich eine im Vergleich zu herkömmlichen Tiefzieh-Verpackungskörpern gleichmäßigere Dicke des Bodens des Verpackungskörpers. Dies reduziert die Gefahr von Brüchen oder Rissen im Bodenbereich des Verpackungskörpers. Zudem ergibt sich aber auch eine gleichmäßigere Verteilung der Foliendicke über die gesamte Oberfläche des Verpackungskörpers, so dass auch die Radien des Verpackungskörpers gut und gleichmäßig formbar sind.

Erfindungsgemäß lassen sich daher auch größere Ziehtiefen bei hoher Produktqualität erreichen. Zudem ergibt sich die Möglichkeit, die Ziehtiefen schnell und automatisch einzustellen, was bei Verpackungen für Produkte mit unregelmäßiger Form oder häufig wechselnden Abmessungen vorteilhaft ist.

Typischerweise ist die erste Position des Formwerkzeugeinsatzes bzw. der Formwerkzeugeinsätze eine obere Position und die zweite Position des Formwerkzeugeinsatzes bzw. der Formwerkzeugeinsätze eine untere Position. In diesem Fall wird die Druckluft von oben auf die Tiefziehfolie zugeführt, so dass sich der Verpackungskörper nach unten ausformt. Es ist aber ebenso möglich, dass die Druckluft von unten auf die Tiefziehfolie geführt wird, so dass sich der Verpackungskörper nach oben ausformt. In diesem Fall ist die erste Position des Formwerkzeugeinsatzes bzw. der Formwerkzeugeinsätze eine untere Position und die zweite Position des Formwerkzeugeinsatzes bzw. der Formwerkzeugeinsätze eine obere Position.

Vorteilhafterweise umfasst die Antriebseinrichtung einen oder mehrere Pneumatikzylinder und zusätzlich wenigstens einen Hydraulikzylinder, die mit dem Formwerkzeug mechanisch gekoppelt sind, wobei der Hydraulikzylinder ebenfalls mit der Steuereinrichtung steuerungstechnisch gekoppelt ist.

Dabei steuert die Steuereinrichtung den Hydraulikzylinder derart an, dass er bei Erreichen einer festgelegten Position des Formwerkzeugeinsatzes bzw. der Formwerkzeugeinsätze zwischen der ersten Position und der zweiten Position das den Hydraulikzylinder antreibende Hydraulikmedium in einem Hydraulikkreis an einer Strömung hindert und die festgelegte Position für eine vorgegebene Zeitspanne hält, bis die Folie auf der gesamten formgebenden Oberfläche des Formwerkzeugeinsatzes bzw. der Formwerkzeugeinsätze aufliegt. Anschließend gibt die Steuereinrichtung die Strömung des Hydraulikmediums im Hydraulikkreis wieder frei, so dass der Formwerkzeugeinsatz bzw. der Formwerkzeugeinsätze in die zweite Position gelangt/gelangen.

Die erfindungsgemäße Tiefzieheinrichtung erlaubt somit ein mehrstufiges Tiefziehen von Verpackungskörpern: In einer ersten Stufe wird zunächst Druckluft zugeführt, so dass der Boden und die Radien in den bodenseitigen Kantenbereich geformt werden. Während dieser ersten Stufe erfolgt die Verriegelung der Hydraulik, d.h., dass das den Hydraulikzylinder antreibende Hydraulikmedium im Hydraulikkreis an seiner Strömung gehindert wird, bspw. indem ein Absperrventil den Hydraulikkreis absperrt.

In einer zweiten Stufe wird die Strömung des Hydraulikmediums im Hydraulickreis wieder freigegeben, d.h. dass bspw. das Absperrventil den Hydraulikkreis wieder öffnet, so dass der Formwerkzeugeinsatz bzw. die Formwerkzeugeinsätze in seine/ihre zweite Position verbracht werden kann/können. Auf diese Weise wird eine weitere Verformung des Bodens weitgehend verhindert und es wird Material im Bereich der Seitenwände der Verpackung abgezogen.

Eine Weiterbildung der Erfindung sieht vor, dass die vorgegebene Zeitspanne, während der der Formwerkzeugeinsatz bzw. der Formwerkzeugeinsätze in der festgelegten Position gehalten wird/werden, über ein Bedienpult in der Steuereinrichtung einstellbar ist. Dies ermöglicht eine flexible Anpassung an unterschiedliche Verpackungskörper und/oder unterschiedliche Tiefziehfolien.

Gemäß einer Weiterbildung der Erfindung ist eine Sensoreinrichtung vorgesehen, mittels der die Position des Formwerkzeugeinsatzes bzw. der Formwerkzeugeinsätze ermittelt wird, die die Steuereinrichtung zur Steuerung der Antriebseinrichtung heranzieht. Vorteilhafterweise wird die derart ermittelte Position des Formwerkzeugeinsatzes bzw. der Formwerkzeugeinsätze zudem zur Steuerung des Hydraulikzylinders herangezogen.

Eine Weiterbildung der Erfindung sieht vor, dass die Sensoreinrichtung einen Impulszähler aufweist, der eine Leiter oder Zahnstange und einen induktiven Sensor umfasst, so dass der Impulszähler anhand gezählter Impulse die Position des Formwerkzeugeinsatzes bzw. der Formwerkzeugeinsätze ermittelt. Dies ermöglicht ein präzises und einfaches Feststellen der Position des Formwerkzeugeinsatzes bzw. der Formwerkzeugeinsätze und der Ziehtiefen. Zur Erzielung einer hohen Messgenauigkeit sind die Leiter bzw. die Zahnstange eine lasergeschnittener Leiter bzw. eine lasergeschnittene Zahnstange.

Gemäß einer Weiterbildung der Erfindung ist über das Bedienpult in der Steuereinrichtung die festgelegte Position des Formwerkzeugeinsatzes bzw. der Formwerkzeugeinsätze, nämlich die Position zwischen der ersten Position und der zweiten Position, einstellbar. Dies ermöglicht eine flexible Anpassung an unterschiedliche Verpackungskörper und/oder unterschiedliche Tiefziehfolien.

Eine Weiterbildung der Erfindung sieht vor, dass über das Bedienpult in der Steuereinrichtung die zweite Position des Formwerkzeugeinsatzes bzw. der Formwerkzeugeinsätze zur Festlegung der Ziehtiefe einstellbar ist. Auch hierdurch wird eine flexible Anpassung an unterschiedliche Verpackungskörper und/oder unterschiedliche Tiefziehfolien erleichtert.

Gemäß einer Weiterbildung der Erfindung ist die Steuereinrichtung derart ausgebildet, dass sie mittels der Sensoreinrichtung das Erreichen der zweiten Position erkennt und bei erkanntem Erreichen der zweiten Position das Hydraulikmedium im Hydraulikkreis an einer weiteren Strömung hindert. Somit ergibt sich eine definierte Ziehtiefe des Verpackungskörpers, da durch ein derartiges Verriegeln der Hydraulikströmung der Hydraulikzylinder sofort in seiner Position verharrt und eine weitere Bewegung des Formwerkzeugeinsatzes bzw. der Formwerkzeugeinsätze verhindert.

Weiterbildungen der Erfindung ergeben sich aus den Ansprüchen, der Beschreibung und den Zeichnungen. Die vorgenannten Vorteile von Merkmalen und von Kombinationen mehrerer Merkmale sind beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausgestaltungen der Erfindung ist ebenfalls möglich und wird hiermit vorgeschlagen. Dies betrifft auch solche Merkmale, die in separaten Zeichnungen dargestellt sind oder bei deren Beschreibung genannt werden.

In der Zeichnung zeigen:
- Fig. 1: ein Ausführungsbeispiel einer erfindungsgemäßen Tiefzieheinrichtung in einer drucklosen Ruheposition,
- Fig. 2: die in Fig. 1 gezeigte Tiefzieheinrichtung in einer Ausgangsposition kurz vor Beginn eines Tiefziehvorganges,
- Fig. 3: die in Fig. 1 gezeigte Tiefzieheinrichtung in einer auf die in Fig. 2 dargestellte Position folgenden Position,
- Fig. 4: die in Fig. 1 gezeigte Tiefzieheinrichtung in einer auf die in Fig. 3 dargestellte Position folgenden Position,
- Fig. 5: die in Fig. 1 gezeigte Tiefzieheinrichtung in einer auf die in Fig. 4 dargestellte Position folgenden Position,
- Fig. 6: die in Fig. 1 gezeigte Tiefzieheinrichtung in einer auf die in Fig. 5 dargestellte Position folgenden Position,
- Fig. 7: die in Fig. 1 gezeigte Tiefzieheinrichtung in einer auf die in Fig. 6 dargestellte Position folgenden Position,

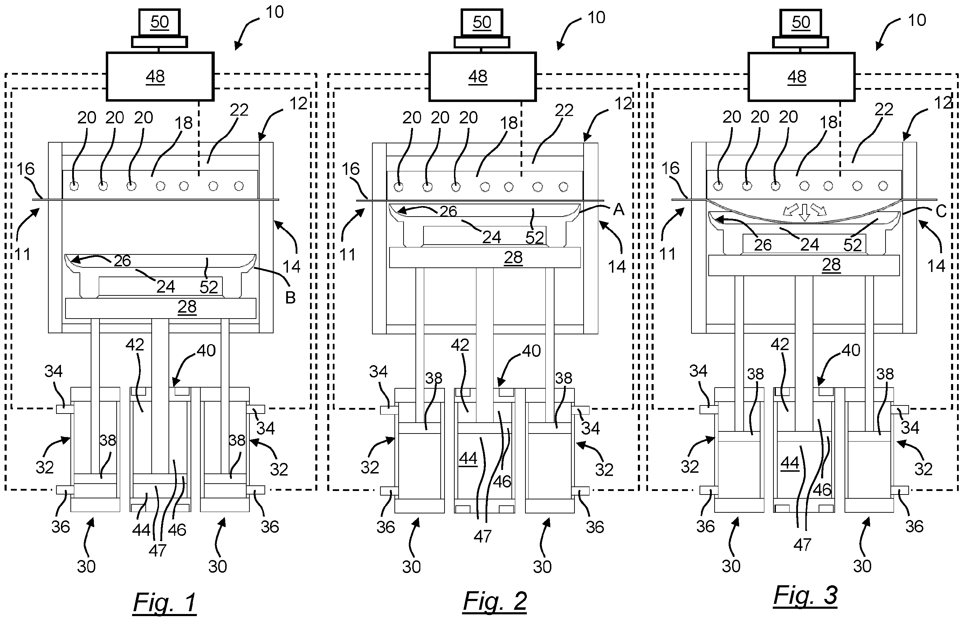

Fig. 1 zeigt ein Ausführungsbeispiel einer erfindungsgemäßen Tiefzieheinrichtung 10 in einer drucklosen Ruheposition.

Die Tiefzieheinrichtung 10 umfasst ein Formwerkzeug 11 mit einem Formwerkzeugoberteil 12 sowie einem Formwerkzeugunterteil 14, zwischen denen eine Tiefziehfolie 16 zu liegen gekommen ist. Das Formwerkzeugoberteil 12 weist eine Heizplatte 18 mit einer Mehrzahl von Heizstäben 20 auf, mittels der die Heizplatte erhitzt wird. Die Tiefziehfolie 16 und die Heizplatte 18 können miteinander in Berührung gebracht werden, so dass ein effizienter Wärmeübergang von der Heizplatte 18 auf die Tiefziehfolie 16 erfolgen kann.

Die Heizplatte 18 kann vorteilhafterweise nicht dargestellte Durchgangsbohrungen aufweisen, die einen Raum 22 oberhalb der Heizplatte 18 mit dem Bereich der Heizplatte 18 verbinden, der mit der Tiefziehfolie 16 in Kontakt gelangt. Über diesen Raum 22 kann dann Druckluft zwischen die Heizplatte 18 und die Tiefziehfolie 16 gebracht werden, um die Tiefziehfolie 16 zu verformen.

Das Formwerkzeugunterteil 14 weist einen formgebenden Formwerkzeugeinsatz 24 auf. Im dargestellten Ausführungsbeispiel ist er nach Art eines Tellers ausgebildet, der einen Randbereich 26 mit definierten Radien umfasst.

Statt eines Formwerkzeugeinsatzes 24 können auch mehrere Formwerkzeugeinsätze 24 vorgesehen sein. Auch wenn die Figuren nur einen Formwerkzeugeinsatz 24 zeigen, gilt die vorliegende Beschreibung auch für den Fall, dass das Formwerkzeugunterteil 14 mehrere Formwerkzeugeinsätze 24 einweist.

Der Formwerkzeugeinsatz 24 kann bspw. kreisrund ausgebildet sein, um Verpackungskörper mit einer zylindrischen Grundstruktur herzustellen. Alternativ kann der Formwerkzeugeinsatz 24 aber auch andere Konturen aufweisen, bspw. eine im Wesentlichen quadratische oder rechteckige Grundform, um Verpackungskörper mit einer quaderartigen Grundstruktur auszubilden.

Im dargestellten Ausführungsbeispiel befindet sich der Formwerkzeugeinsatz 24 auf einer Tragplatte 28, die mittels einer Antriebseinrichtung 30 höhenverstellbar ist. Die Antriebseinrichtung 30 kann alternativ jedoch direkt auf den Formwerkzeugeinsatz 24 einwirken, d.h. ohne Zwischenschaltung der Tragplatte 28. Die Tragplatte 28 erleichtert jedoch den Austausch des Formwerkzeugeinsatzes 24, um die Tiefzieheinrichtung 10 an unterschiedliche Verpackungskörper schnell und unkompliziert anpassen zu können.

Die Antriebseinrichtung 30 wird vorteilhafter Weise durch einen oder mehrere Pneumatikzylinder 32 gebildet. Über Druckluftanschlüsse 34, 36 kann Druckluft oberhalb und unterhalb eines Zylinderkolbens 38 zugeführt und abgeführt werden.

Vorzugsweise ist neben der Antriebseinrichtung 30 wenigstens ein Hydraulikzylinder 40 vorgesehen, der ebenfalls mechanisch mit dem Formwerkzeugeinsatz 24 gekoppelt ist, insbesondere unter Zwischenschaltung der Tragplatte 28. Der Hydraulikzylinder 40 kann aber auch unmittelbar ohne Zwischenschaltung der Tragplatte 28 mit dem Formwerkzeugeinsatz 24 gekoppelt sein.

Der Hydraulikzylinder 40 ist vorteilhafterweise als passives Wirkorgan vorgesehen, d.h., dass der Hydraulikzylinder 40 nicht selbst für ein Anheben oder Absenken des Formwerkzeugeinsatzes 24 sorgt, sondern lediglich ein Anheben oder Absenken verhindert und den Formwerkzeugeinsatz 24 in seiner Position feststellt. Zu diesem Zweck sind die Kammern 42 und 44 oberhalb und unterhalb eines Zylinderkolbens 46 mit einem Hydraulikmedium 47 gefüllt, welches zunächst in einem Hydraulikkreis frei strömen kann. Dieser Hydraulikkreis ist jedoch mit einem Absperrventil versehen, so dass eine Strömung des Hydraulikmediums 47 unterbunden, aber auch wieder freigegeben werden kann. Ein derartiger Hydraulikzylinder ermöglicht durch Absperren des Absperrventils ein abruptes Anhalten des Formwerkzeugeinsatzes 24 und ermöglicht aber ebenso durch Öffnen des Absperrventils eine sofortige Freigabe des Anhebens oder Absenkens des Formwerkzeugeinsatzes 24 mittels der Antriebseinrichtung 30.

Die Antriebseinrichtung 30 kann in einer alternativen Ausführungsform rein hydraulisch arbeitend ausgebildet sein. In diesem Fall ist der Hydraulikzylinder 40 entbehrlich.

Statt einer wie oben beschrieben aufgebauten pneumatischen Antriebseinrichtung 30 kann alternativ eine elektromotorische Antriebseinrichtung, bspw. ein elektrischer Linearmotor eingesetzt werden, mittels der der Formwerkzeugeinsatz 24 ebenfalls in seiner Höhe verändert werden kann. In diesem Fall ist der Hydraulikzylinder 40 ebenfalls entbehrlich.

Aus Vereinfachungsgründen sind die Pneumatikleitungen und Hydraulikleitungen zu den Pneumatikzylindern 32 und dem Hydraulikzylinder 40 nicht dargestellt. Ebenso ist aus Gründen der vereinfachten Darstellung eine Steuereinrichtung 48, welche die Antriebseinrichtung 30 und ggf. das Absperrventil ansteuert, nicht mit sämtlichen ihrer Verbindungen dargestellt. Gestrichelte Linien veranschaulichen jedoch die Einwirkung der Steuereinrichtung 48 auf die Antriebseinrichtung 30 sowie auf die Heizstäbe 20 der Heizplatte 18. Die Steuereinrichtung 48 ist ferner mit einem Bedienpult 50 verbunden, über welches die Eingabe von Parametern in die Steuereinrichtung 48 und die Ausgabe von Informationen, insbesondere eingestellte Parameter sowie Angaben über die herzustellenden und hergestellten Verpackungskörper ermöglicht wird.

Der Formwerkzeugeinsatz 24 kann insbesondere zwei unterschiedliche Positionen A, B, insbesondere Extrempositionen, einnehmen. In einer ersten Position A befindet sich der Formwerkzeugeinsatz 24 in unmittelbarer Nähe zu der Heizplatte 18. Diese Position A ist in Fig. 2 dargestellt, worauf nachfolgend näher eingegangen werden wird.

In einer zweiten Position B befindet sich der Formwerkzeugeinsatz 24 entfernt von der Heizplatte 18. Diese zweite Position B ist in Fig. 1 dargestellt.

Nachdem die Steuereinrichtung 48 ein Signal von Positionssensoren zur Sensierung der Positionen von Formwerkzeugoberteil 12 und Formwerkzeugunterteil 14 erhalten hat, das anzeigt, dass das Formwerkzeug bestehend aus Formwerkzeugoberteil 12 und Formwerkzeugunterteil 14 verschlossen ist, wird die Antriebseinrichtung 30 durch Aktivierung der Pneumatikzylinder 32 betätigt und der Formwerkzeugeinsatz 24 in Richtung der in Fig. 2 dargestellten Position A angehoben.

Fig. 2 zeigt die Tiefzieheinrichtung 10 in einer Ausgangsposition kurz vor Beginn eines Tiefziehvorganges, bei der sich der Formwerkzeugeinsatz 24 in der ersten Position A befindet, d.h. in einer oberen Position, in der sich der Formwerkzeugeinsatz 24 in unmittelbarer Nähe zur Tiefziehfolie 16 befindet.

Nachdem der Formwerkzeugeinsatz 24 die erste Position A eingenommen hat, erzeugt die Steuereinrichtung ein Signal zum Senken des Formwerkzeugeinsatzes 24 und gleichzeitigem Einleiten von Druckluft in den Bereich zwischen der Tiefziehfolie 16 und der Heizplatte 18.

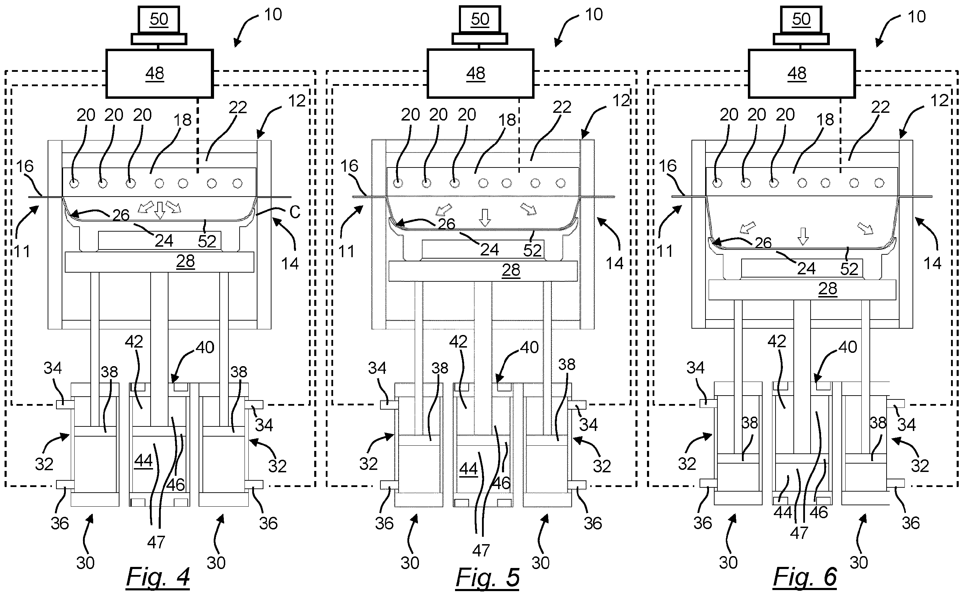

Fig. 3 zeigt die sich daraus ergebende Situation, in der sich der Formwerkzeugeinsatz 24 nun in einer festgelegten Position C befindet, die zwischen der ersten Position A und der zweiten Position B liegt. Sobald diese festgelegte Position C erreicht wurde, wird das Absperrventil betätigt und damit der Hydraulikkreis abgesperrt, so dass die Position des Formwerkzeugeinsatzes 24 vorübergehend nicht mehr weiter verändert wird. Die Tiefziehfolie 16 schmiegt sich dabei an die Oberfläche 52 des Formwerkzeugeinsatzes 24 an, bis sich schließlich die in Fig. 4 gezeigte Situation einstellt.

Fig. 4 zeigt ebenfalls die Position C des Formwerkzeugeinsatzes 24, wobei jedoch in der Fig. 4 die Tiefziehfolie 16 im Wesentlichen vollständig auf der Oberfläche 52 des Formwerkzeugeinsatzes 24 aufliegt, insbesondere der Boden des Formwerkzeugeinsatzes 24 sowie der Randbereich 26 mit der Tiefziehfolie 16 belegt sind, so dass der Bodenbereich des zu bildenden Verpackungskörpers nunmehr bereits ausgeformt ist. Dieser Vorgang geschieht unter weiterer Zuführung von Druckluft von oben.

Nach einer Zeitverzögerung, die am Bedienpult eingestellt wird, wird das Absperrventil wieder geöffnet, so dass das Hydraulikmedium im Hydraulikkreis strömen kann. Dies erlaubt eine weitere Absenkung des Formwerkzeugeinsatzes 24.

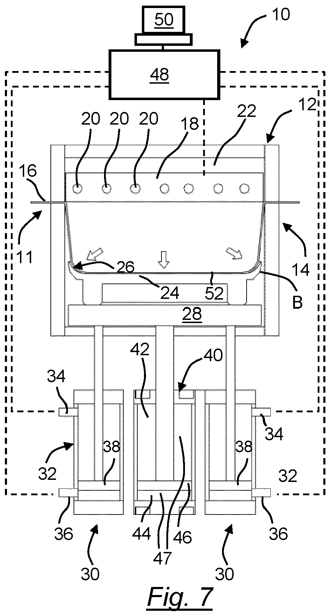

Fig. 5, 6 und 7 zeigen das weitere Absenken des Formwerkzeugeinsatzes 24 nach der Öffnung des Absperrventils. Während dieser Abwärtsbewegung des Formwerkzeugeinsatzes 24 werden die Seitenwände der Verpackung geformt, indem die Tiefziehfolie 16 im Bereich der Seitenwände gestreckt wird. Während dessen wird die Folie im Bodenbereich nur noch gering verformt, da die Tiefziehfolie auf der Oberfläche 52 des Formwerkzeugeinsatzes 24 mittels Druckluft aufgepresst wird.

Nachdem der Formwerkzeugeinsatz 24 seine untere Position B erreicht hat, wird das Formwerkzeug geöffnet, indem das Formwerkzeugunterteil 14 vom Formwerkzeugoberteil 12 entfernt wird. Die zuvor gebildete Verpackung wird entnommen und die Tiefzieheinrichtung 10 ist bereit für einen neuen Tiefziehzyklus.

Diese Art des Tiefziehens ermöglicht eine vergleichsweise dicke Folienschicht am Verpackungsboden sowie eine gleichmäßigere Verteilung der Foliendicke an den Wänden der Verpackung und zwar auch bei einem großen Tiefziehverhältnis. Ebenso wird eine gute gleichmäßige Formung der Verpackungsradien im Randbereich 26 erreicht. Dies erlaubt die Verwendung von dünnerer Tiefziehfolie im Vergleich zur herkömmlichen Tiefzieheinrichtung bei gleichen Ziehtiefen.

Die erfindungsgemäße Tiefzieheinrichtung ermöglicht ferner einen einfachen Formatwechsel, insbesondere durch Auswechseln des Formwerkzeugeinsatzes 24 und/oder durch eine Anpassung der Höhe der zweiten Position B. Ebenso ermöglicht die erfindungsgemäße Tiefzieheinrichtung eine flexible Anpassung beim Verpacken von Produkten mit unregelmäßiger Form oder häufig wechselnden Abmessungen.

Vorliegend werden folgende Bezugszeichen verwendet:
- 10: Tiefzieheinrichtung
- 11: Formwerkzeug
- 12: Formwerkzeugoberteil
- 14: Formwerkzeugunterteil
- 16: Tiefziehfolie
- 18: Heizplatte
- 20: Heizstäbe
- 22: Raum oberhalb der Heizplatte
- 24: Formwerkzeugeinsatz
- 26: Randbereich
- 28: Tragplatte
- 30: Antriebseinrichtung
- 32: Pneumatikzylinder
- 34: Druckluftanschluss
- 36: Druckluftanschluss
- 38: Zylinderkolbens
- 40: Hydraulikzylinder
- 42: Kammer
- 44: Kammer
- 46: Zylinderkolben
- 47: Hydraulikmedium
- 48: Steuereinrichtung
- 50: Bedienpult
- 52: Oberfläche des Formwerkzeugeinsatzes
- A: erste Position
- B: zweite Position
- C: festgelegte Position zwischen erster Position und zweiter Position

## Patentansprüche

1. Tiefzieheinrichtung zum Tiefziehen von Verpackungskörpern, zum Beispiel Verpackungsschalen für Verpackungen, aus Tiefziehfolie (16) mit einem Formwerkzeugoberteil (12) und einem Formwerkzeugunterteil (14), wobei das Formwerkzeugoberteil (12) eine Heizplatte (18) zum Erhitzen der Tiefziehfolie (16) aufweist und das Formwerkzeugunterteil (14) einen oder mehrere formgebende Formwerkzeugeinsätze (24) aufweist, wobei zum Tiefziehen Druckluft die erhitzte Tiefziehfolie (16) gegen den Formwerkzeugeinsatz (24) bzw. die Formwerkzeugeinsätze (24) drückt,
**dadurch gekennzeichnet,**
**dass** sich der Formwerkzeugeinsatz (24) bzw. die Formwerkzeugeinsätze (24) mittels einer von einer Steuereinrichtung (48) angesteuerten Antriebseinrichtung (30) anheben und absenken lässt/lassen, und
**dass** die Steuereinrichtung (48) derart mit der Antriebseinrichtung (30) gekoppelt ist und die Antriebseinrichtung (30) derart ansteuert, dass die Antriebseinrichtung (30) während des Tiefziehens den Formwerkzeugeinsatz (24) bzw. die Formwerkzeugeinsätze (24) von einer ersten, der Heizplatte (18) angenäherten Position (A) in eine zweite, von der Heizplatte (18) entfernte Position (B) derart verbringt, dass die Tiefziehfolie (16) während des Tiefziehens an dem Formwerkzeugeinsatz (24) bzw. den Formwerkzeugeinsätzen (24) anliegt.

2. Tiefzieheinrichtung nach Anspruch 1,
**dadurch gekennzeichnet, dass**
die Antriebseinrichtung (30) einen oder mehrere Pneumatikzylinder (32) umfasst und zusätzlich wenigstens ein Hydraulikzylinder (40) vorgesehen ist, die mit dem Formwerkzeugeinsatz (24) bzw. den Formwerkzeugeinsätzen (24) mechanisch gekoppelt sind, wobei der Hydraulikzylinder (40) ebenfalls mit der Steuereinrichtung (48) gekoppelt ist,
wobei die Steuereinrichtung (48) den Hydraulikzylinder (40) derart ansteuert, dass er bei Erreichen einer festgelegten Position (C) des Formwerkzeugeinsatzes (24) bzw. der Formwerkzeugeinsätze (24) zwischen der ersten Position (A) und der zweiten Position (B) das den Hydraulikzylinder (40) antreibende Hydraulikmedium (47) in einem Hydraulikkreis an einer Strömung hindert und die festgelegte Position (C) für eine vorgegebene Zeitspanne hält, bis die Tiefziehfolie (16) auf der gesamten formgebenden Oberfläche (52) des Formwerkzeugeinsatzes (24) bzw. der Formwerkzeugeinsätze (24) aufliegt, und anschließend die Steuereinrichtung (48) die Strömung des Hydraulikmediums (47) im Hydraulikkreis wieder freigibt, so dass der Formwerkzeugeinsatz (24) bzw. die Formwerkzeugeinsätze (24) in die zweite Position (B) gelangt/gelangen.

3. Tiefzieheinrichtung nach Anspruch 2,
**dadurch gekennzeichnet, dass**
die vorgegebene Zeitspanne über ein Bedienpult (50) in der Steuereinrichtung (48) einstellbar ist.

4. Tiefzieheinrichtung nach einem der vorhergehenden Ansprüche,
**gekennzeichnet durch**
eine Sensoreinrichtung, mittels der die Position des Formwerkzeugeinsatzes (24) bzw. der Formwerkzeugeinsätze (24) ermittelt wird, die die Steuereinrichtung (48) zur Steuerung der Antriebseinrichtung (30) heranzieht.

5. Tiefzieheinrichtung nach Anspruch 4 mit Rückbezug auf Anspruch 2 oder 3,
**dadurch gekennzeichnet, dass**
die Steuereinrichtung (48) die ermittelte Position des Formwerkzeugeinsatzes (24) bzw. der Formwerkzeugeinsätze (24) auch zur Steuerung des Hydraulikzylinders (40) heranzieht.

6. Tiefzieheinrichtung nach Anspruch 4 oder 5,
**dadurch gekennzeichnet, dass**
die Sensoreinrichtung einen Impulszähler aufweist, der eine Leiter oder Zahnstange und einen induktiven Sensor umfasst, so dass der Impulszähler anhand gezählter Impulse die Position des Formwerkzeugeinsatzes (24) bzw. der Formwerkzeugeinsätze (24) ermittelt.

7. Tiefzieheinrichtung nach Anspruch 3 oder einem der Ansprüche 4 bis 6 mit Rückbezug auf Anspruch 3,
**dadurch gekennzeichnet, dass**
über das Bedienpult (50) in der Steuereinrichtung (48) die festgelegte Position des Formwerkzeugeinsatzes (24) bzw. der Formwerkzeugeinsätze (24) zwischen der ersten Position (A) und der zweiten Position (B) einstellbar ist.

8. Tiefzieheinrichtung nach Anspruch 3 oder einem der vorhergehenden Ansprüche 4 bis 7 mit Rückbezug auf Anspruch 3,
**dadurch gekennzeichnet, dass**
über das Bedienpult (50) in der Steuereinrichtung (48) die zweite Position (B) des Formwerkzeugeinsatzes (24) bzw. der Formwerkzeugeinsätze (24) zur Festlegung der Ziehtiefe einstellbar ist.

9. Tiefzieheinrichtung nach Anspruch 8,
**dadurch gekennzeichnet, dass**
die Steuereinrichtung (48) mittels der Sensoreinrichtung das Erreichen der zweiten Position (B) erkennt und bei erkanntem Erreichen der zweiten Position (B) das Hydraulikmedium (47) im Hydraulikkreis an einer weiteren Strömung hindert.

10. Tiefzieheinrichtung nach Anspruch 2 oder einem der Ansprüche 3 bis 9 mit Rückbezug auf Anspruch 2 ,
**dadurch gekennzeichnet, dass**
im Hydraulikkreis ein Absperrventil vorgesehen ist, um die Strömung des Hydraulikmediums (47) zu verhindern.

## Claims

1. Thermoforming device for thermoforming packaging bodies, for example packaging trays for packages, made from thermoforming sheet (16), with a molding tool upper part (12) and a molding tool lower part (14), wherein the molding tool upper part (12) comprising a heating plate (18) for heating the thermoforming sheet (16) and the molding tool lower part (14) comprising one or more molding tool inserts (24), wherein for thermoforming compressed air presses the heated thermoforming sheet (16) against the molding tool insert (24) or molding tool inserts (24),
**characterized in that**
the molding tool insert (24) or molding tool inserts (24) can be raised and lowered by means of an actuating device (30) controlled by a control device (48), and
the control device (48) is coupled to the actuating device (30) and controls the actuating device (30) in such a way that, during thermoforming, the actuating device (30) moves the molding tool insert (24) or molding tool inserts (24) from a first position (A) close to the heating plate (18) into a second position (B) remote from the heating plate (18) in such a way that the thermoforming sheet (16) rests against the molding tool insert (24) or molding tool inserts (24) during thermoforming.

2. Thermoforming device according to claim 1,
**characterized in that**
the actuating device (30) comprises one or more pneumatic cylinders (32) and, in addition, at least one hydraulic cylinder (40) is provided which are mechanically coupled to the molding tool insert (24) or molding tool inserts (24), wherein the hydraulic cylinder (40) also being coupled to the control device (48),
wherein the control device (48) controls the hydraulic cylinder (40) in such a way that, when reaching a defined position (C) of the molding tool insert (24) or molding tool inserts (24) between the first position (A) and the second position (B), the hydraulic cylinder (40) prevents the hydraulic medium (47), which actuates the hydraulic cylinder (40), from flowing in a hydraulic circuit and holds the defined position (C) for a predetermined period of time until the thermoforming sheet (16) is applied to the entire molding surface (52) of the molding tool insert (24) or molding tool inserts (24), and then the control device (48) releases the flow of the hydraulic medium (47) in the hydraulic circuit, so that the molding tool insert (24) or molding tool inserts (24) reaches/reach the second position (B).

3. Thermoforming device according to claim 2,
**characterized in that**
the predetermined period of time can be set via a control panel (50) in the control device (48).

4. Thermoforming device according to any of the preceding claims,
**characterized by**
a sensor device by means of which the position of the molding tool insert (24) or molding tool inserts (24) is determined, wherein the control device (48) uses the position to control the actuating device (30).

5. Thermoforming device according to claim 4 with reference back to claim 2 or 3,
**characterized in that**
the control device (48) also uses the determined position of the molding tool insert (24) or molding tool inserts (24) to control the hydraulic cylinder (40).

6. Thermoforming device according to claim 4 or 5,
**characterized in that**
the sensor device has a pulse counter comprising a ladder or rack and an inductive sensor, so that the pulse counter uses counted pulses to determine the position of the molding tool insert (24) or molding tool inserts (24).

7. Thermoforming device according to claim 3 or any of claims 4 to 6 with reference back to claim 3,
**characterized in that**
the defined position of the molding tool insert (24) or molding tool inserts (24) is adjustable between the first position (A) and the second position (B) by means of the control panel (50) in the control device (48).

8. Thermoforming device according to claim 3 or any of the preceding claims 4 to 7 with reference back to claim 3,
**characterized in that**
the second position (B) of the molding tool insert (24) or molding tool inserts (24) is adjustable by means of the control panel (50) in the control device (48) in order to define the drawing depth.

9. Thermoforming device according to claim 8,
**characterized in that**
the control device (48) detects by means of the sensor device that the second position (B) has been reached and, when reaching the second position (B) has been detected, the control device (48) prevents the hydraulic medium (47) in the hydraulic circuit from flowing further.

10. Thermoforming device according to claim 2 or any of claims 3 to 9 with reference back to claim 2,
**characterized in that**
a shut-off valve is provided in the hydraulic circuit to prevent the flow of the hydraulic medium (47).

## Revendications

1. Système d'emboutissage pour emboutir des corps d'emballage, par exemple des barquettes de conditionnement pour des emballages, à partir de feuille à emboutir (16) avec une partie supérieure d'outil de formage (12) et une partie inférieure d'outil de formage (14), sachant que la partie supérieure d'outil de formage (12) comporte une plaque chauffante (18) pour chauffer la feuille à emboutir (16) et la partie inférieure d'outil de formage (14) comporte un ou plusieurs empreintes d'outils de formage donnant la forme (24), sachant que pour l'emboutissage de l'air comprimé comprime la feuille à emboutir (16) chauffée contre l'empreinte d'outil de formage (24) ou les empreintes d'outils de formage (24)
**caractérisé en ce que**
l'empreinte d'outil de formage (24) ou les empreintes d'outils de formage (24) peut/peuvent être relevée(s) ou abaissée(s) au moyen d'un système d'entraînement (30) actionné par un système de commande (48) et
**en ce que le** système de commande (48) est couplé de telle sorte au système d'entraînement (30) et le système d'entraînement (30) est actionné de telle sorte que le système d'entraînement (30) fait passer pendant l'emboutissage l'empreinte d'outil de formage (24) ou les empreintes d'outils de formage (24), d'une première position (A) rapprochée de la plaque chauffante (18) à une deuxième position (B) éloignée de la plaque chauffante (18) de telle manière que la feuille à emboutir (16) s'applique pendant l'emboutissage à l'empreinte d'outil de formage (24) ou aux empreintes d'outils de formage (24).

2. Système d'emboutissage selon la revendication 1,
**caractérisé en ce que**
le système d'entraînement (30) comprend un ou plusieurs vérins pneumatiques (32) et en plus au moins un vérin hydraulique (40) est prévu, qui sont mécaniquement couplés à l'empreinte d'outil de formage (24) ou aux empreintes d'outils de formage (24), sachant que le vérin hydraulique (40) est également couplé au système de commande (48),
sachant que le système de commande (48) actionne le vérin hydraulique (40) de telle manière qu'en atteignant une position établie (C) de l'empreinte d'outil de formage (24) ou des empreintes d'outils de formage (24) entre la première position (A) et la deuxième position (B), il évite un écoulement dans un circuit hydraulique du milieu hydraulique (47) entraînant le vérin hydraulique (40) et maintient la position établie (C) pendant un espace de temps prédéfini jusqu'à ce que la feuille à emboutir (16) s'applique à toute la surface (52) donnant la forme de l'empreinte d'outil de formage (24) ou des empreintes d'outils de formage (24) et l'empreinte d'outil de formage (24) ou aux empreintes d'outils de formage (24) et le système de commande (48) libère ensuite à nouveau l'écoulement du milieu hydraulique (47) dans le circuit hydraulique de telle sorte que l'empreinte d'outil de formage (24) ou les empreintes d'outils de formage (24) parvient/parviennent dans la deuxième position (B).

3. Système d'emboutissage selon la revendication 2,
**caractérisé en ce que**
l'espace de temps prédéfini peut être réglé par le biais d'un pupitre de commande (50) dans le système de commande (48).

4. Système d'emboutissage selon l'une quelconque des revendications précédentes,
**caractérisé par**
un système de détection, au moyen duquel la position de l'empreinte d'outil de formage (24) ou des empreintes d'outil de formage (24) est déterminée, qui fait intervenir le système de commande (48) pour commander le système d'entraînement (30).

5. Système d'emboutissage selon la revendication 4 avec référence à la revendication 2 ou 3,
**caractérisé en ce que**
le système de commande (48) fait également intervenir la position déterminée de l'empreinte d'outil de formage (24) ou des empreintes d'outils de formage (24) pour commander le vérin hydraulique (40).

6. Système d'emboutissage selon les revendications 4 ou 5, **caractérisé en ce que**
le système de détection comporte un compteur d'impulsions, qui comprend une échelle ou crémaillère et un capteur inductif de telle sorte que le compteur d'impulsions détermine, à l'aide des impulsions décomptées, la position de l'empreinte d'outil de formage (24) ou des empreintes d'outils de formage.

7. Système d'emboutissage selon la revendication 3 ou l'une quelconque des revendications 4 à 6 avec référence à la revendication 3,
**caractérisé en ce que**
la position établie de l'empreinte d'outil de formage (24) ou des empreintes d'outil de formage (24) peut être réglée entre la première position (A) et la deuxième position (B) par le biais du pupitre de commande (50) dans le système de commande (48).

8. Système d'emboutissage selon la revendication 3 ou l'une quelconque des revendications précédentes 4 à 7 avec référence à la revendication 3,
**caractérisé en ce que**
la deuxième position (B) de l'empreinte d'outil de formage (24) ou des empreintes d'outil de formage (24) peut être réglée pour établir la profondeur d'emboutissage par le biais du pupitre de commande (50) dans le système de commande (48).

9. Système d'emboutissage selon la revendication 8,
**caractérisé en ce que**
le système de commande (48) identifie l'atteinte de la deuxième position (B) au moyen du dispositif de détection et évite un autre écoulement du milieu hydraulique (47) dans le circuit hydraulique, une fois l'atteinte de la deuxième position (B) identifiée.

10. Système d'emboutissage selon la revendication 2 ou l'une quelconque des revendications 3 à 9 avec référence à la revendication 2,
**caractérisé en ce qu'**
une vanne d'arrêt est prévue dans le circuit hydraulique pour éviter l'écoulement du milieu hydraulique (47).
